# EUROPÄISCHE PATENTANMELDUNG

(11) **EP 0 649 241 A1**
(43) Veröffentlichungstag der Anmeldung: **19.04.1995**
(21) Anmeldenummer: 94113753.1
(22) Anmeldetag: 02.09.1994
(51) Int. Cl.: H04M 9/00

(54) **Einrichtung zur Übertragung von Ruf- und Belegungszustandssignalen von Wechsel- oder Gegen-Lautsprechanlagen mit Linienwahl über eine Zweidraht-Fernleitung**

(30) Priorität: 13.10.1993 DE 4334906
(71) Anmelder: Neumann Elektronik GmbH, D-45478 Mülheim (DE)
(72) Erfinder: Neumann, Dirk, D-45478 Mülheim/Ruhr (DE)
(74) Vertreter: Feder, Wolf-Dietrich, Dr. Dipl.-Phys.

(57) **Zusammenfassung**

Eine Einrichtung zur Übertragung von Ruf- und Belegungszustandssignalen zwischen einer tastengesteuerten, eine zentrale Vermittlungseinrichtung aufweisenden Wechsel-, Gegen- oder Lautsprechanlage mit Linienwahl und einer zweiten derartigen Anlage bzw. einer einzelnen Teilnehmereinrichtung für eine derartige Anlage über eine Zweidraht-Fernleitung. Jede der beiden Anlagen ist an die Zweidrahtleitung (FL) über einen Linienkonzentrator angeschlossen, der einen Rechner (1) enthält, welcher einerseits eine vorgegebene Anzahl von Linieneingangsschaltungen (E) und Linienausgangsschaltungen (A) und andererseits ein Modem (3) steuert, welches an die Zweidrahtleitung (FL) angeschlossen ist derart, daß jedem über die Linieneingangsschaltungen als Gleichstromsignal eintreffenden Ruf- oder Belegungszustandssignal ein moduliertes NF-Steuersignal zugeordnet und im Zeitmultiplex der Fernleitung (FL) zugeführt wird und jedem über die Fernleitung (FL) dem Modem (3) zugeführten modulierten NF-Steuersignal in den Linienausgangsschaltungen (A) ein als Gleichstromsignal abzugebendes Ruf- oder Belegungszustandssignal zugeordnet wird.

## Beschreibung

Die Erfindung betrifft eine Einrichtung zur Übertragung von Ruf- und Belegungszustandssignalen zwischen einer tastengesteuerten, eine zentrale Vermittlungseinrichtung aufweisenden Wechsel-, Gegen- oder Lautsprechanlage mit Linienwahl und einer zweiten tastengesteuerten, eine zentrale Vermittlungseinrichtung aufweisenden Wechsel-, Gegen- oder Lautsprechanlage mit Linienwahl oder einer einzelnen Teilnehmereinrichtung für eine derartige Anlage über eine Zweidraht-Fernleitung.

Tastengesteuerte, eine zentrale Vermittlungseinrichtung aufweisende Wechsel-, Gegen- oder Lautsprechanlagen mit Linienwahl sind allgemein bekannt. Es gibt Anlagen dieser Art, bei der die Durchschaltung der Ruf- und Belegungszustandssignale in der zentralen Vermittlungseinrichtung auf elektronischem Wege erfolgt. Eine derartige Anlage (EZV) ist beispielsweise in DE 24 34 321 C3 beschrieben. In jüngerer Zeit sind auch Anlagen dieser Art bekannt geworden, bei denen die Durchschaltung der Ruf- und Belegungszustandssignale in einer mikroprozessorgesteuerten zentralen Vermittlungseinrichtung erfolgt. Eine derartige Anlage (MZV) ist beispielsweise in DE 28 37 950 C2 beschrieben.

Es besteht nun häufig das Bedürfnis, beispielsweise in größeren Industriebetrieben, zwei oder mehrere, örtlich voneinander getrennte tastengesteuerte Wechsel-, Gegen- oder Lautsprechanlagen mit Linienwahl derart miteinander zu koppeln, daß mindestens eine vorgegebene Anzahl von Teilnehmereinrichtungen der einen Anlage mit einer vorgegebenen Anzahl von Teilnehmereinrichtungen der anderen Anlage Kontakt aufnehmen kann. Da es sich in beiden Fällen um Anlagen mit Linienwahl handeln soll, würde eine solche Koppelung einen erheblichen Bedarf an Steueradern verursachen, die gegebenenfalls über eine größere Entfernung verlegt werden müssen.

Der Erfindung liegt die Aufgabe zugrunde, eine Einrichtung der eingangs und im Oberbegriff des Patentanspruchs 1 angegebenen Art zu schaffen, mit der die Übertragung der Ruf- und Belegungszustandssignale zwischen den obengenannten Anlagen oder zwischen einer solchen Anlage und einer örtlich entfernten zusätzlichen Teilnehmereinrichtung über eine Zweidraht-Fernleitung erfolgen kann, was zu einer erheblichen Reduzierung des Steueradernbedarfes führt. Dabei sollte die Koppelung derartiger Anlagen über die Zweidraht-Fernleitung möglich sein, unabhängig davon, ob es sich um eine Anlage mit elektronisch gesteuerter zentraler Vermittlungseinrichtung (EZV) oder eine Anlage mit mikroprozessorgesteuerter zentraler Vermittlungseinrichtung (MZV) handelt.

Die Lösung dieser Aufgabe geschieht erfindungsgemäß mit den Merkmalen aus dem kennzeichnenden Teil des Patentanspruchs 1. Vorteilhafte Weiterbildungen der Erfindung sind in den Unteransprüchen beschrieben.

Der Grundgedanke der Erfindung besteht darin, den Anschluß der Anlagen an die Zweidraht-Fernleitung über einen Linienkonzentrator vorzunehmen, der eine potentialgetrennte Koppelung der Anlagen bei einer Reduzierung des Steueradernbedarfes auf die zwei Adern der Fernleitung ermöglicht. Durch den Linienkonzentrator werden die als Gleichstromsignale auftretenden Ruf- und Belegungszustandssignale der einen Anlage in modulierte NF-Steuersignale umgesetzt und im Zeitmultiplex über die Zweidraht-Fernleitung einem entsprechenden Linienkonzentrator der anderen Anlage zugeführt, durch den die Umsetzung in die entsprechenden Ruf- und Belegungszustandssignale, die wiederum als Gleichstromsignale auftreten, durchgeführt wird. Dabei kann der Datenaustausch zwischen je zwei Linienkonzentratoren über die Zweidraht-Fernleitung im Duplexverkehr erfolgen.

Die erfindungsgemäße Einrichtung ermöglicht einen außerordentlich flexiblen Einsatz bei der Koppelung von Wechsel-, Gegen- oder Lautsprechanlagen mit Linienwahl unterschiedlicher Auslegung und mit unterschiedlich aufgebauten zentralen Vermittlungseinrichtungen. Vorteilhafte Ausführungsformen derartiger Koppelungsmöglichkeiten sind in den Ansprüchen 3 bis 7 beschrieben.

Eine besonders vorteilhafte Ausführungsform der erfindungsgemäßen Einrichtung, die in Anspruch 8 beschrieben ist, erlaubt einen schaltungstechnisch besonders einfachen Aufbau der Linien-Eingangsschaltungen und Linien-Ausgangsschaltungen, in dem diese in einfacher Weise zu einer bidirektionalen Schaltung zusammengefaßt werden.

Im folgenden werden Ausführungsbeispiele der erfindungsgemäßen Einrichtung und ihrer Anwendung zur Übertragung von Ruf- und Belegungszustandssignalen zwischen tastengesteuerten, eine zentrale Vermittlungseinrichtung aufweisenden Wechsel- oder Gegen-Lautsprechanlagen mit Linienwahl über eine Zweidrah-Fernleitung näher erläutert.

In den Zeichnungen zeigen:
Fig. 1 in einem Blockschaltbild einen Linienkonzentrator für eine tastengesteuerte Wechsel-, Gegen- oder Lautsprechanlage mit Linienwahl;
Fig. 2 eine Erweiterung des Linienkonzentrators nach Fig. 1 für eine Anlage mit einer größeren Anzahl von Linienverbindungen;
Fig. 3 in detaillierterer Darstellung die Linieneingangs- und Ausgangsschaltungen des Linienkonzentrators nach Fig. 1;
Fig. 4 in einer Teildarstellung den Anschluß einer Teilnehmereinrichtung an eine Wechsel-, Gegen- oder Lautsprechanlage mit einem Linienkonzentrator nach Fig. 1 und 3;
Fig. 5 in einem Blockschaltbild die Koppelung zweier eine mikroprozessorgesteuerte Vermittlungseinrichtung aufweisender Wechsel- oder Gegensprechanlage;
Fig. 6 in einer Darstellung analog Fig. 5 die Koppelung einer eine mikroprozessorgesteuerte Vermittlungseinrichtung aufweisenden Wechsel- oder Gegensprechanlage mit einer eine elektronische Vermittlungseinrichtung aufweisenden Wechsel- oder Gegensprechanlage;
Fig. 7 in einer Darstellung analog Fig. 5 die Koppelung einer eine mikroprozessorgesteuerte Vermittlungseinrichtung aufweisenden Wechsel- oder Gegen-Lautsprechanlage mit einer einzelnen örtlich entfernten Teilnehmereinrichtung.

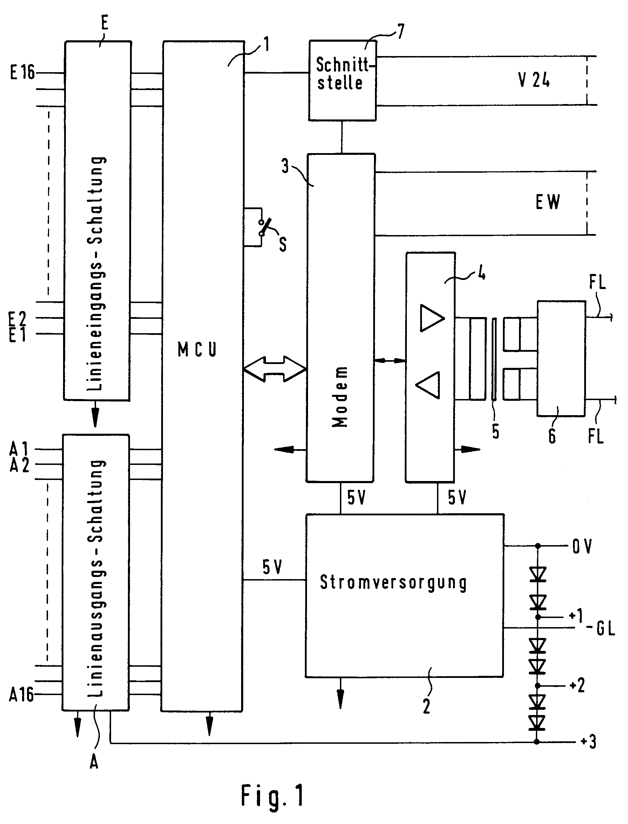

Fig. 1 zeigt einen Linienkonzentrator für eine im übrigen nicht näher dargestellte tastengesteuerte, eine zentrale Vermittlungseinrichtung aufweisende Wechsel-, Gegen- oder Lautsprechanlage mit Linienwahl. Die Anlage ist auf 16 Linien ausgelegt und besitzt einen Rechner (MCU) 1, der eine in Fig. 1 mit E bezeichnete Linieneingangsschaltung mit den Linieneingängen E1 bis E16 sowie eine mit A bezeichnete Linienausgangsschaltung mit den Linienausgängen A1 bis A16 ansteuert. Weiterhin steuert der Rechner 1 ein Modem 3, welches über eine Verstärkerstufe 4 und einen Übertrager 5 sowie ein Filter 6 zur Erzielung der elektromagnetischen Verträglichkeit an eine Zweidraht-Fernleitung FL angeschlossen ist. Weiterhin sind der Rechner 1 und das Modem 3 an eine Schnittstellensteuerungsschaltung 7 (V24) angeschlossen, über welche eine weitere unabhängige tastengesteuerte, eine mikroprozessorgesteuerte Vermittlungseinrichtung aufweisende Wechsel-, Gegen- oder Lautsprechanlage mit Linienwahl zur Abgabe und Aufnahme von Rechnerdaten an die gleiche Zweidraht-Fernleitung FL angeschlossen werden kann. Weiterhin weist das Modem 3 Ein/Ausgänge EW auf, mit denen es, wie weiter unten näher erläutert, an Erweiterungsschaltungen des Linienkonzentrators angeschlossen werden kann. Eine weiter unten näher erläuterte Stromversorgungsschaltung 2 setzt die primär zugeführte Gleichspannung auf die Versorgungsspannung der integrierten Schaltkreise der Einrichtungen 1, 3 und 4 um.

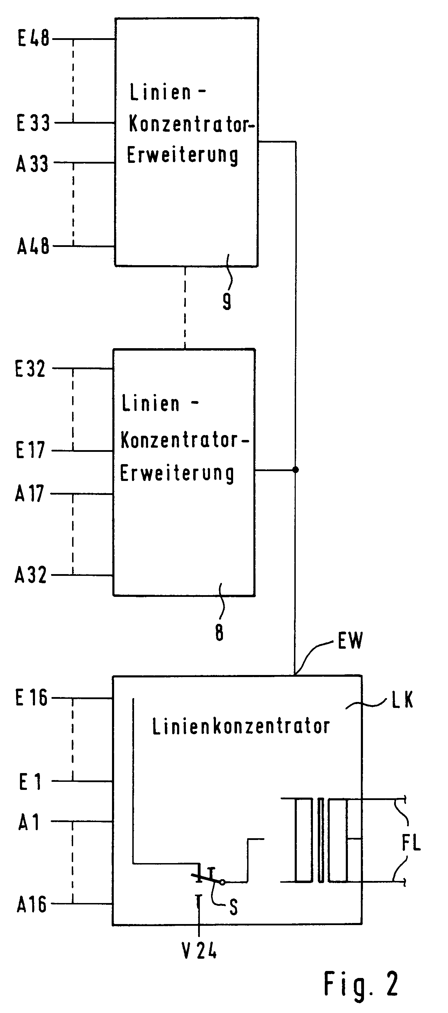

Der Aufbau des Modems 3 ist an sich bekannt. Gesteuert vom Rechner 1 werden in dem Modern 3 den über die Linieneingangsschaltung E eintreffenden als Gleichstromsignale vorliegenden Ruf- und Belegungszustandssignalen modulierte NF-Steuersignale zugeordnet und diese im Zeitmultiplex der Zweidraht-Fernleitung FL zugeführt. Zur Erzeugung des modulierten NF-Steuersignals können übliche bekannte Modulationsverfahren (FSK, DPSK, QAM) verwendet werden. Weiterhin werden die über die Zweidraht-Fernleitung FL eintreffenden modulierten NF-Steuersignale dem Modern 3 zugeführt und gesteuert vom Rechner 1 werden ihnen durch die Linienausgangsschaltung A entsprechende Ruf- und Belegungszustandssignale in Form von Gleichstromsignalen zugeordnet und den nicht dargestellten Teilnehmereinrichtungen zugeführt. Soll die in Fig. 1 dargestellte Einrichtung bei einer Wechsel-, Gegen- oder Lautsprechanlage eingesetzt werden, die eine größere Anzahl von Linien besitzt, so kann dies in der in Fig. 2 dargestellten Weise geschehen. In Fig. 2 sind Erweiterungsschaltungen 8 und 9 für den Linienkonzentrator dargestellt, die in nicht dargestellter Weise jeweils einen Rechner enthalten, der die entsprechenden Linieneingangsschaltungen E17 bis E32 und E33 bis E48 für zusätzliche Linien sowie Linienausgangsschaltungen A17 bis A32 und A33 bis A48 für die zusätzlichen Linien ansteuert. Weiterhin ist eine nicht dargestellte entsprechende Stromversorgungsschaltung für die Linienausgangsschaltungen erforderlich. Über den Ein/Ausgang EW sind die Linienkonzentrator-Erweiterungsschaltungen 8 und 9 an den Linienkonzentrator LK, wie er in Fig. 1 dargestellt ist, angeschlossen. Dies bedeutet, daß die Ruf- und Belegungszustandssignale über das gleiche Modern 3 der Zweidraht-Fernleitung FL zugeführt und für die an die Linienkonzentrator-Erweiterungsschaltung 8 und 9 angeschlossenen Linien eintreffenden Signale auch von diesem Modern 3 abgenommen werden. Zur Potentialtrennung können die Linienkonzentrator-Erweiterungsschaltungen auch über Optokoppler an den Linienkonzentrator LK angeschlossen werden.

Fig. 1 und 2 ist auch zu entnehmen, daß über einen Schalter S eine Umschaltmöglichkeit besteht, gemäß der entweder die über die serielle Schnittstelle 7 (V24) angeschlossene Anlage oder die Linien E/A1 bis E/A48 an die Zweidraht-Fernleitung FL ankoppelbar sind.

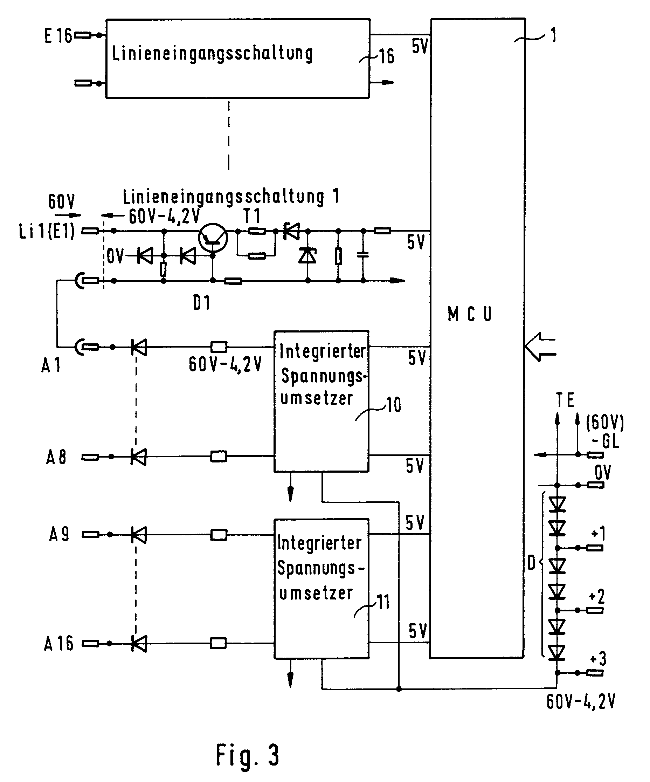

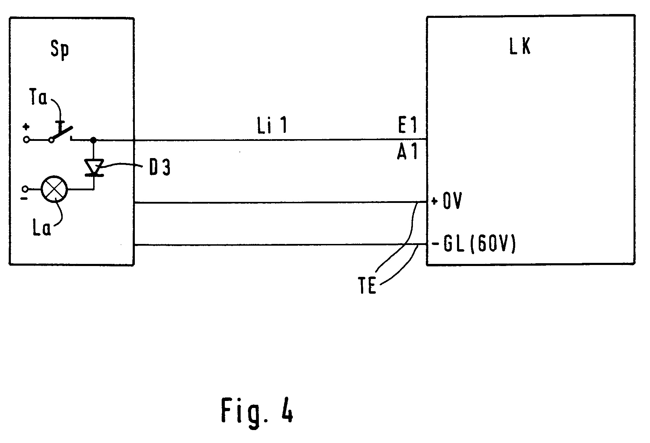

Im folgenden wird anhand der Fig. 3 und 4 die Verbindung der Teilnehmereinrichtungen über die Linieneingangsschaltungen E1 bis E16 und die Linienausgangsschaltungen A1 bis A16 bei dem Linienkonzentrator nach Fig. 1 näher erläutert. Wie Fig. 4 bei einem Beispiel für eine einzelne Linie Li1 zu entnehmen, wird einer Teilnehmereinrichtung (Sprechstelle Sp) vom Linienkonzentrator LK bzw. von der zentralen Vermittlungseinrichtung aus direkt eine Versorgungsspannung -GL von beispielsweise 60V zugeführt. In der Sprechstelle Sp befinden sich eine Anzahl von Ruftastern und Signallampen, von denen in Fig. 4 ein Ruftaster Ta und eine Signallampe La dargestellt ist. Wie bei derartigen Anlagen bekannt, kann durch Drücken des Tasters Ta ein Rufsignal für die Linie Li1 auf die Linieneingangsschaltung E1 gegeben werden. Ebenso kann von der Linienausgangsschaltung A1 über die Linie Li1 ein Belegungszustandssignal abgegeben werden, das in der Sprechstelle Sp über eine Diode D3 einer Signallampe La zugeführt wird. Am Aufleuchten der Signallampe La erkennt der Teilnehmer den Belegungszustand der Linie Li1 und damit der entsprechenden anderen Teilnehmereinrichtung.

In Fig. 3 ist anhand der Linieneingangsschaltung E1 und der Linienausgangsschaltung A1 dargestellt, wie bei dem dargestellten Ausführungsbeispiel diese beiden Schaltungen zu einer gemeinsamen bidirektionalen Schaltung zusammengefaßt sind. Vom Versorgungsausgang TE aus wird den Teilnehmereinrichtungen die volle Versorgungsspannung -GL (60V) zugeführt. Diese Versorgungsspannung wird nicht in voller Höhe, sondern mittels einer Diodenkette D auf einen vorgegebenen Betrag erniedrigt, den integrierten Spannungsumsetzern 10 und 11 der Linienausgangsschaltungen A1 bis A16 zugeführt. So wird beispielsweise eine erniedrigte Spannung von 60V-4,2V zugeführt. Ihre Steuersignale erhalten die integrierten Spannungsumsetzer 10 und 11 auf dem üblichen Potential von 5V vom Rechner 1. Der Anschluß der Linieneingangsschaltungen E1 bis E16 an die Eingänge des Rechners 1 und der Linienausgangsschaltungen A1 bis A 16 an die Ausgänge des Rechners 1 kann in an sich bekannter Weise auch potentialgetrennt über Optokoppler erfolgen. Die Linienausgangsschaltung A1 ist nunmehr mit der Linieneingangsschaltung E1 zu einer bidirektionalen Ein/Ausgangsschaltung zusammengefaßt. Hierzu liegt in der Linieneingangsschaltung E1 ein Transistor T1, dessen Emitter an die Linie Li1 und dessen Kollektor über übliche und nicht näher erläuterte Strom- und Spannungsschwellwertschaltungen an einen Eingang des Rechners 1 angeschlossen ist. Wie aus Fig. 3 abzulesen, ist die Linienausgangsschaltung A1 an die Basis des Transistors T1 und über eine in Ausgangsrichtung gepolte, die Emitter-Basis-Strecke des Transistors T1 überbrückende Diode D1 an die Linie Li1 angeschlossen. Ein über die Linie Li1 eintreffendes Rufsignal mit dem vollen Spannungswert von 60V gelangt in den bidirektionalen Zweig der Schaltung und über die Emitter-Kollektorstrecke des Transistors T1 spannungsvermindert zum Eingang des Rechners 1. Ein von der Linienausgangsschaltung A1 kommendes Belegungszustandssignal gelangt mit dem Spannungswert 60V-4,2V über die Diode D1 auf den bidirektionalen Zweig der Schaltung und damit auf die Linie Li1. Der Spannungsunterschied macht es möglich, daß auch bei aktivierter Linienausgangsschaltung A1 ein über die Linie Li1 kommendes Rufssignal erkannt werden kann, da es in seinem Spannungswert höher liegt als das Ausgangssignal. Dies hat den großen Vorteil, daß beim Vorhandensein einer üblichen Vorrangschaltung mittels einer für den Vorrang bestimmten Taste beim Vorliegen eines Belegtsignals auf der dieser Taste zugeordneten Linie eine bestehende Verbindung unterbrochen und eine Sprechverbindung hergestellt werden kann. Weiterhin kann auch über den Rechner 1 ein nicht dargestellter Rufspeicher betätigt werden, so daß bei Freiwerden der Linie die Durchschaltung einer Sprechverbindung sogleich möglich ist.

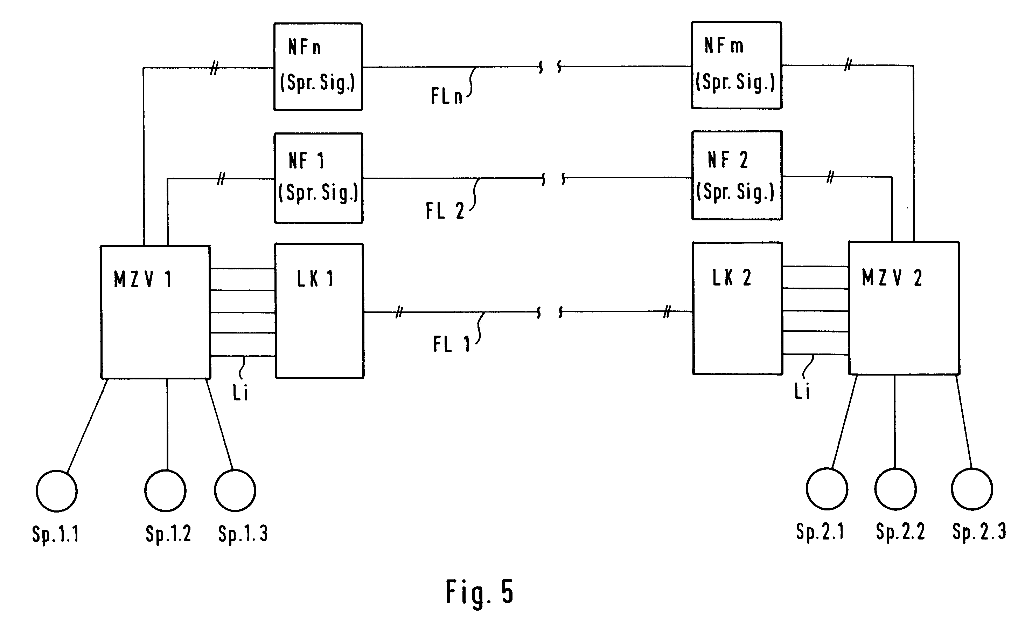

Im folgenden werden anhand der Fig. 5 bis 7 vorteilhafte Koppelungsmöglichkeiten von Wechsel-, Gegen- oder Lautsprechanlagen mit Linienwahl mittels des beschriebenen Linienkonzentrators über eine Zweidraht-Fernleitung beschrieben.

Fig. 5 zeigt die Einrichtung in einer Ausführung zur Übertragung von Ruf- und Belegungszustandssignalen zwischen einer ersten Wechsel-, Gegen- oder Lautsprechanlage mit Linienwahl MZV1, welche eine mikroprozessorgesteuerte zentrale Vermittlungseinrichtung aufweist mit einer zweiten Wechsel-, Gegen- oder Lautsprechanlage mit Linienwahl MZV2, welche ebenfalls eine mikroprozessorgesteuerte zentrale Vermittlungseinrichtung aufweist. Die Verbindung der allgemein mit Li bezeichneten Linien mit der Zweidraht-Fernleitung FL1 erfolgt jeweils über die Linienkonzentratoren LK1 und LK2, die in der oben beschriebenen Weise aufgebaut sind. Nach Durchschaltung der Verbindungen werden die Sprachsignale über Niederfrequenzverbindungsschaltungen NF1 und NF2 bzw. NFn und NFm und eine besondere Fernleitung FL2 bzw. FLn übertragen. Es können gleichzeitig mehrere Verkehrswege betrieben werden. An jede der beiden Anlagen MZV1 bzw. MZV2 sind mehrere Teilnehmereinrichtungen bzw. Sprechstellen Sp1.1, Sp1.2 und Sp1.3 bzw. Sp2.1, Sp2.2 und Sp2.3 angeschlossen, die hier nur als Beispiele für eine größere Anzahl von jeweiligen Teilnehmereinrichtungen aufgeführt sind.

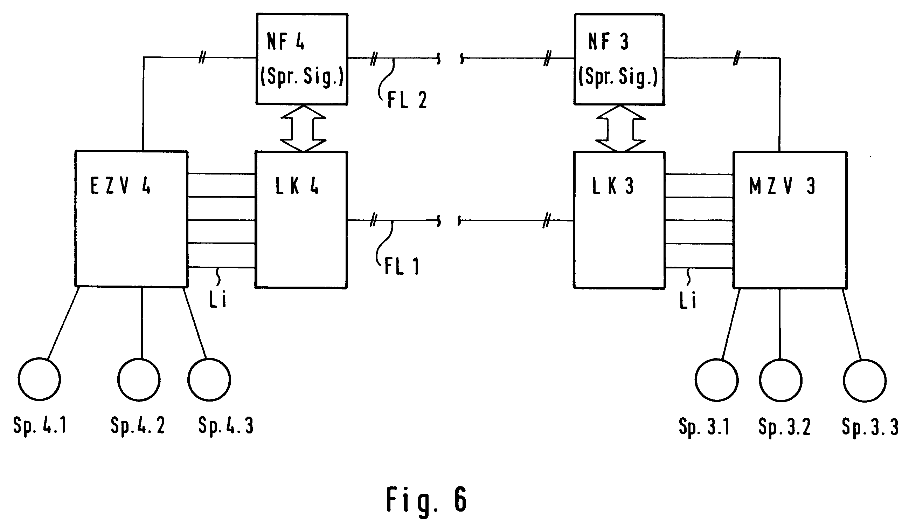

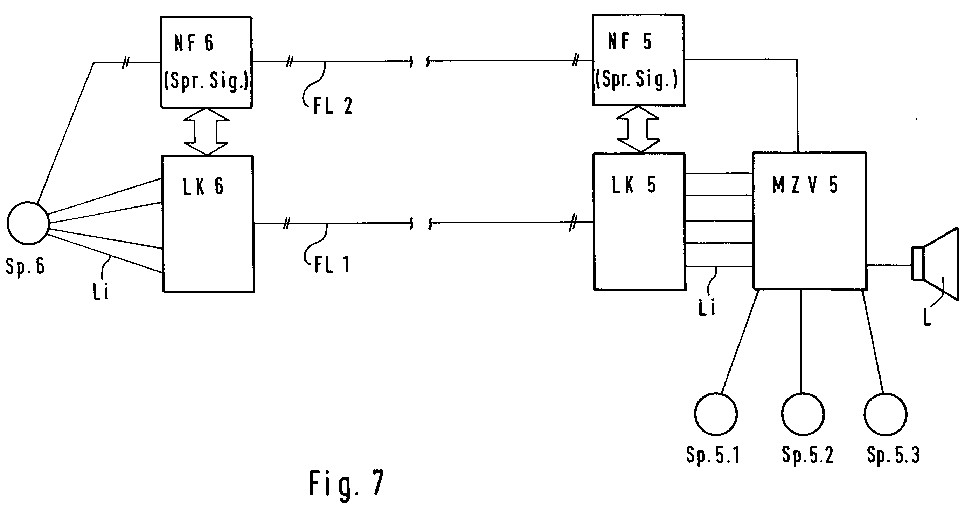

Fig. 6 zeigt die Verbindung zwischen einer ersten Wechsel-, Gegen- oder Lautsprechanlage mit Linienwahl MZV3, welche eine mikroprozessorgesteuerte zentrale Vermittlungseinrichtung besitzt, mit einer zweiten Wechsel-, Gegen- oder Lautsprechanlage mit Linienwahl EZV4, welche eine elektronische zentrale Vermittlungseinrichtung besitzt. Auch hier erfolgt der Anschluß der Linien Li an die Zweidraht-Fernleitung FL1 über die Linienkonzentratoren LK3 bzw. LK4, die wiederum in der oben beschriebenen Weise aufgebaut sind. Zur Übertragung der Sprachsignale nach Durchschaltung der Verbindungswege dienen die NF-Verbindungsschaltungen NF3 und NF4, welche über eine besondere Fernleitung FL2 miteinander verbunden sind. Hierbei besteht der besondere Vorteil der Verwendung der Linienkonzentratoren LK4 und LK3 darin, daß diese bzw. ihre Rechner gleichzeitig die Steuerung der Schaltungen NF4 und NF3 übernehmen können. So kann beispielsweise eine Richtungsumschaltung oder eine Leitungsabschaltung gesteuert werden. Weiterhin können die NF-Verbindungseinschübe Vorrichtungen zur Leitungsüberwachung und zur Erzeugung von Störmeldungen enthalten, die beispielsweise gesteuert vom Linienkonzentrator bei Durchschaltung einer Sprechverbindung abgeschaltet werden. Dabei können über die Zweidraht-Fernleitung FL1 zwischen den Linienkonzentratoren LK4 und LK3 auch solche, die Steuerung der NF-Verbindungsschaltungen betreffende Steuersignale übertragen werden.Als Teilnehmereinrichtung bzw. Sprechstellen sind beispielsweise aufgeführt für die Anlage MZV3 die Sprechstellen Sp3.1, Sp3.2 und Sp3.3 und für die Anlage EZV4 die Sprechstellen Sp4.1, Sp4.2 und Sp4.3. Fig. 7 zeigt noch ein Beispiel der Verbindung zwischen einer Wechsel-, Gegen- oder Lautsprechanlage mit Linienwahl MZV5, welche eine mikroprozessorgesteuerte zentrale Vermittlungseinrichtung aufweist, mit einer einzelnen aber entfernt aufgestellten Teilnehmereinrichtung bzw. Sprechstelle Sp6. Auch hier erfolgt der Anschluß der Linien Li an die Zweidraht-Fernleitung FL1 zur Übertragung der Ruf- und Belegungszustandssignale über die Linienkonzentratoren LK5 und LK6, die in der oben beschriebenen Weise aufgebaut sind. Nach Durchschaltung des Verbindungsweges werden die Sprachsignale unter Zwischenschaltung der NF-Verbindungsschaltungen NF5 und NF6 über die besondere Fernleitung FL2 übertragen. Auch hier können die Rechner der Linienkonzentratoren LK6 und LK5 die Steuerung der Schaltungen NF6 und NF5 übernehmen. Die Sprechstelle Sp6 kann mit den Sprechstellen der Anlage MZV5, die beispielsweise als Sp5.1, Sp5.2 und Sp5.3 dargestellt sind, in Verbindung getreten oder es kann auch von Sp6 aus ein einzelner Lautsprecher L angesteuert und z.B. eine Durchsage abgegeben werden.

## Patentansprüche

1. Einrichtung zur Übertragung von Ruf- und Belegungszustandssignalen zwischen einer tastengesteuerten, eine zentrale Vermittlungseinrichtung aufweisenden Wechsel-, Gegen- oder Lautsprechanlage mit Linienwahl und einer zweiten tastengesteuerten, eine zentrale Vermittlungseinrichtung aufweisenden Wechsel-, Gegen- oder Lautsprechanlage mit Linienwahl oder einer einzelnen Teilnehmereinrichtung für eine derartige Anlage über eine Zweidraht-Fernleitung, dadurch gekennzeichnet, daß jede der beiden Anlagen (MZV1, MZV2, MZV3, MZV4, MZV5) bzw. die einzelne Teilnehmereinrichtung (Sp6) an die Zweidrahtleitung (FL1) über eine als Linienkonzentrator wirkende Vorrichtung (LK1, LK2, LK3, LK4, LK5, LK6) angeschlossen ist, die mindestens einen Rechner (1) enthält, der gemäß einem vorgegebenen Programm einerseits eine vorgegebene Anzahl von Linieneingangsschaltungen (E) und Linienausgangsschaltungen (A) steuert, an welche die zu den Teilnehmereinrichtungen innerhalb der Anlage führenden Linien (E1-E16, A1-A16) angeschlossen sind und der andererseits ein Modem (3) steuert, welches an die Zweidrahtleitung (FL) angeschlossen ist derart, daß jedem über die Linieneingangsschaltungen (E) als Gleichstromsignal eintreffenden Ruf- oder Belegungszustandssignal im Modern (3) ein moduliertes NF-Steuersignal zugeordnet und im Zeitmultiplex der Zweidraht-Fernleitung (FL) zugeführt wird und jedem über die Zweidraht-Fernleitung (FL) dem Modem (3) zugeführten modulierten NF-Steuersignal in den Linienausgangsschaltungen (A) ein als Gleichstromsignal abzugebendes Ruf- oder Belegungszustandssignal zugeordnet wird.

2. Einrichtung nach Anspruch 1 dadurch gekennzeichnet, daß der Datenaustausch zwischen je zwei Linienkonzentratoren (LK1-LK2, LK3-LK4, LK5-LK6) über die Zweidraht-Fernleitung (FL1) im Duplexverkehr erfolgt.

3. Einrichtung nach Anspruch 1 oder 2 dadurch gekennzeichnet, daß mindestens eine der beiden Wechsel- oder Gegen-Lautsprechanlagen (MZV1, MZV2, MZV3, MZV5) eine mikroprozessorgesteuerte zentrale Vermittlungseinrichtung aufweist.

4. Einrichtung nach einem der Ansprüche 1 bis 3 dadurch gekennzeichnet, daß bei einer Wechsel-, Gegen- oder Lautsprechanlage (EZV4), die eine elektronische zentrale Vermittlungseinrichtung aufweist, der Rechner des Linienkonzentrators (LK4) eine NF-Verbindungseinheit (NF4) ansteuert, über welche die NF-Sprachsignale einer gesonderten Zweidrahtleitung (FL2) zugeführt bzw. von ihr abgenommen werden.

5. Einrichtung nach einem der Ansprüche 1 bis 3 dadurch gekennzeichnet, daß bei einer einzelnen Teilnehmereinrichtung (Sp6) der Rechner des Linienkonzentrators (LK6) eine NF-Verbindungseinheit (NF6) ansteuert, über welche die NF-Sprachsignale einer gesonderten Zweidrahtleitung (FL2) zugeführt bzw. von ihr abgenommen werden.

6. Einrichtung nach einem der Ansprüche 1 bis 5 dadurch gekennzeichnet, daß der Linienkonzentrator (LK) mindestens eine Erweiterungsschaltung (8, 9) aufweist, die jeweils einen Rechner enthält, der einerseits eine vorgegebene Anzahl zusätzlicher Linieneingangsschaltungen (E17 bis E48) und Linienausgangsschaltungen (A17 bis A48) steuert und andererseits das im Linienkonzentrator (LK) angeordnete gemeinsame Modem (3) steuert.

7. Einrichtung nach einem der Ansprüche 1 bis 6 dadurch gekennzeichnet, daß mittels des eine zusätzliche Schnittstellensteuerung (7) enthaltenden Linienkonzentrators (LK) über eine serielle Schnittstelle (V24) eine weitere Wechsel-, Gegen- oder Lautsprechanlage mit mikroprozessorgesteuerter zentraler Vermittlungseinrichtung an die Zweidraht-Fernleitung (FL) zur Übertragung von Rechnerdaten angeschlossen ist.

8. Einrichtung nach einem der Ansprüche 1 bis 7 dadurch gekennzeichnet, daß die Teilnehmereinrichtungen direkt an eine Stromversorgung (TE) angeschlossen sind und mit einer vorgegebenen Nennspannung (-GL) beaufschlagt werden, während die Linienausgangsschaltungen (A1 bis A16) einen Spannungsumsetzer (10, 11) enthalten, zur Umsetzung der Ausgangsspannung des Rechners (1) auf eine Ausgangsspannung, deren Wert um einen vorgegebenen Betrag unter der vorgegebenen Nennspannung liegt und jeweils eine Linienausgangsschaltung (A1) mit einer Linieneingangsschaltung (E1) zu einer bidirektionalen an die jeweilige Linie (Li1) angeschlossenen Ein/Ausgangsschaltung zusammengeschaltet ist, deren bidirektionaler mit der Linie (Li1) verbundener Zweig einerseits über die Emitter-Kollektorstrecke eines Transistors (T1) an den Eingangszweig und andererseits über eine die Emitter-Basisstrecke des Transistors (T1) überbrückende in Ausgangsrichtung gepolte Diode (D1) an den Ausgangszweig (A1) angeschlossen ist.
